Europäisches Patentamt

European Patent Office

Office européen des brevets

(19)

(11) EP 0 893 685 A2

(12) EUROPÄISCHE PATENTANMELDUNG

(43) Veröffentlichungstag:
27.01.1999 Patentblatt 1999/04

(51) Int. Cl.⁶: G01N 21/88

(21) Anmeldenummer: 98113171.7

(22) Anmeldetag: 15.07.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 23.07.1997 DE 19731545

(71) Anmelder: Basler GmbH
22926 Ahrensburg (DE)

(72) Erfinder:
• Laux, Wolfram, Dr.
22927 Grosshansdorf (DE)
• Klicker, Jürgen, Dr.
22955 Hoisdorf (DE)

(74) Vertreter:
Jaeschke, Rainer, Dipl.-Ing.
Grüner Weg 77
22851 Norderstedt (DE)

(54) Vorrichtung und Verfahren zum optischen Erfassen der Verformung einer Fläche

(57) Die Erfindung betrifft eine Vorrichtung zum optischen Erfassen der Verformung einer Fläche mit einem eine Matrixbildebene aufweisenden lichtempfindlichen Empfänger, der von wenigstens einer Lichtquelle belichtet wird. Gemäß der Erfindung wird vorgeschlagen, daß die Lichtquelle als nahezu punktförmige Lichtquelle mit ungerichtet ausstrahlendem Licht ausgebildet ist und eine Abbildungsoptik vorgesehen und derart eingestellt ist, daß die Lichtquelle scharf auf der Bildebene abgebildet wird, so daß die zu prüfende Fläche als Reflexionsfläche wirkt, wobei die Lichtquelle bei einer einwandfreien zu prüfenden Fläche eine bekannte Soll-Position auf der Bildebene aufweist, so daß die Verformung anhand der Abweichung der Ist-Position der Abbildung der Lichtquelle von der bekannten Soll-Position der Abbildung der Lichtquelle auf der Bildebene ermittelbar ist. Durch diese Anordnung kann mit einfachen Mitteln eine Verformung, insbesondere eine fehlerhafte Neigung der Oberfläche einer CD oder DVD, mit hoher Genauigkeit ermittelt werden.

FIG.1

**Beschreibung**

Die Erfindung betrifft eine Vorrichtung und ein Verfahren zum optischen Erfassen der Verformung einer Fläche mit wenigstens einem eine Matrixbildebene aufweisenden lichtempfindlichen Empfänger, der von einer Lichtquelle belichtet wird. Insbesondere betrifft die Erfindung eine Vorrichtung und ein Verfahren zum optischen Erfassen der Verformung einer im wesentlichen ebenen Oberfläche, wie die der Datenseite einer CD, DVD oder eines entsprechenden optischen Datenträgers. Es ist daher im folgenden überwiegend von einer CD oder DVD die Rede, ohne daß damit eine Beschränkung verbunden sein soll. Unter Verformungen soll im folgenden unter anderem auch Verkippungen einer Fläche verstanden werden, um die eine Fläche oder ein Flächenabschnitt ausgehend von einer Normallage der Fläche verkippt ist.

Es ist häufig erforderlich, eine mögliche fehlerhafte Verformung einer Oberfläche zu erfassen. Verformungen können beispielsweise als Höhenschlag oder als gegenüber der ebenen Oberfläche geneigte Flächenabschnitte ausgebildet sein. Bei optischen Datenträgern wirken sich derartige Verformungen der Leseseite besonders nachteilig aus, da entsprechend der Verformung auch der optische Abtaststrahl, in der Regel ein Laserstrahl, eine unerwünschte Beeinflussung erfährt. Dies kann vor allem bei solchen CD's oder DVD's zu Problemen führen, die als reiner Datenspeicher für Datenverarbeitungsanlagen dienen, da gespeicherte Daten nicht mehr richtig abgerufen und abgelegt werden können.

Es sind Vorrichtungen bekannt, bei denen die Datenseite einer CD von einem punktförmigen Lichtstrahl eines Lasers bestrahlt wird. Der an der Oberfläche bzw. Spiegelschicht der CD reflektierte Strahl wird auf einen positionsempfindlichen Detektor, beispielsweise eine Vier-Quadranten-Diode, geleitet. Bei einer unzulässigen Ablenkung wird einer der Quadranten belichtet, so daß ein Fehler erkannt werden kann. Bei dieser Meßmethode wird die CD üblicherweise um 360° gedreht, so daß eine Verformung nur entlang eines Radius erfaßt werden kann.

Eine derartige Messung entlang nur eines Radius wird in der Regel nicht mehr ausreichend sein, da aufgrund der immer größer werdenden Datendichte die Anforderungen an die Oberflächengenauigkeit weiter steigen. So darf der Abtaststrahl nach den neuesten für DVD's geltenden Bestimmungen in radialer Richtung nur um 0,8° und in tangentialer Richtung nur um 0,3° durch eventuelle Verformungen abgelenkt werden. Dies erfordert jedoch sehr genaue Messungen.

Ein anderes Problem bei optischen Datenspeichermedien besteht darin, daß die durchsichtige Trägerschicht aus Polycarbonat häufig innere Spannungen aufweist, die zu dem Phänomen der Doppelbrechung führen. Auch Doppelbrechungen führen zu Abtastfehlern, da der optische Datenträger mit dem polarisierten Licht eines Lasers abgetastet wird.

Es ist weiterhin aus der DE 44 34 474 A1 der Anmelderin bekannt, die Datenseite der CD unter einem spitzen Winkel von 45° mit einem linienförmigen, polarisierten Lichtstrahl zu beleuchten. Der reflektierte Lichtstrahl belichtet eine Matrixkamera. Vor der Matrixkamera ist eine Polarisationseinrichtung angeordnet. Mit dieser Vorrichtung ist es zum einen möglich, anhand des empfangenen Verlaufs des Lichtstrahls auf der Bildebene auf eine Verformung zu schließen. Ferner kann durch das Maß der Intensitätsschwächung auf eine mögliche Doppelbrechung geschlossen werden. Hier besteht ein Nachteil darin, daß durch eine mögliche Verformung auch das Resultat der gleichzeitig durchgeführten Erfassung der Doppelbrechung beeinflußt wird.

Der Erfindung liegt die Aufgabe zugrunde, eine Vorrichtung und ein Verfahren der eingangs geschilderten Art so auszubilden, daß eine Erfassung einer Verformung und deren Ausmaß mit einfachen Mitteln sehr genau möglich ist. Gemäß einem weiteren Aspekt der Erfindung soll es möglich sein, Doppelbrechungeigenschaften eines optischen Datenträgers zu erfassen.

Die Aufgabe wird gemäß der Erfindung dadurch gelöst, daß die Lichtquelle als nahezu punktförmige Lichtquelle mit ungerichtet ausstrahlendem Licht ausgebildet ist und daß eine Abbildungsoptik vorgesehen und derart eingestellt ist, daß die Lichtquelle scharf auf der Bildebene des lichtempfindlichen Empfängers abgebildet wird, so daß die zu prüfende Fläche als Reflexionsfläche wirkt, wobei die Lichtquelle bei einer einwandfreien zu prüfenden Fläche eine bekannte Soll-Position auf der Bildebene aufweist, so daß die Verformung anhand der Abweichung der Ist-Position der Abbildung der Lichtquelle von der bekannten Soll-Position der Abbildung der Lichtquelle auf der Bildebene ermittelbar ist. Diese Anordnung hat den Vorteil, daß zum einen eine einfache Lichtquelle verwendet werden kann, die ungerichtetes Licht ausstrahlt. Damit werden aufwendige Blenden und Optiken vermieden.

Voraussetzung ist lediglich, daß diese Lichtquellen eine Strahlkeule mit ausreichend großem Öffnungswinkel und gleichmäßiger Beleuchtungsstärke erzeugen. Für eine solche nahezu punktförmige Lichtquelle können beispielsweise Leuchtdioden bzw. SMD-Leuchtdiodenchips, vorzugsweise ohne zusätzliche Optik, eingesetzt werden, deren erzeugter Lichtpunkt oder Lichtpunkte relativ geringe Abmessungen, beispielsweise nur wenige 0,1 mm aufweisen.

Der erforderliche Öffnungswinkel ist abhängig von der tatsächlich zu messenden Abweichung, d. h. der größten zu detektierenden Verkippung. Im einzelnen gilt, daß der Öffnungswinkel größer sein muß als der doppelte Winkel der zu erfassenden maximalen Verkippung. So kann für die Prüfung einer CD oder DVD ein Öffnungswinkel von 2°-20° oder aber auch lediglich 4°-8° ausreichend sein.

Ein anderer Vorteil besteht darin, daß nur die Verschiebung einer Ist-Position einer Abbildung relativ zu einer bekannten und gespeicherten Soll-Position dieser Abbildung ermittelt werden muß. Aufgrund des Strahlenverlaufes kann dann unmittelbar auf Verformung und deren Ausmaß geschlossen werden. Mit der Vorrichtung gemäß der Erfindung wird eine Winkelmessung durchgeführt, so daß der zu messende Fehler unmittelbar und direkt erfaßt werden kann. Hierdurch wird die Genauigkeit wesentlich erhöht.

Ein besonderer Vorteil bei der Verwendung von Lichtquellen, die ungerichtetes Licht ausstrahlen, ist darin zu sehen, daß ohne weiteres mehrere Lichtquellen vorgesehen werden können, die gemeinsam auf die Bildebene nur eines einzigen lichtempfindlichen Empfängers abgebildet werden. Damit ist es möglich, eine Oberfläche an mehreren Positionen gleichzeitig zu vermessen. Da alle Soll-Positionen der Abbildungen der einzelnen Lichtquellen bekannt sind, kann aus der Verschiebung des einen oder anderen Abbildes auf der Matrixbildebene auf den Verlauf der Verformung geschlossen werden.

Mit der Vorrichtung gemäß der Erfindung gelingt es, auf einfache Weise und mit einfachen Mitteln eine exakte Verformungsmessung einer Fläche durchzuführen. Obwohl die zu prüfende Fläche tatsächlich nicht auf der Bildebene abgebildet wird, gelingt eine eindeutige Zuordnung des zu prüfenden Abschnitts der Fläche.

Die Abbildungsoptik ist in der Regel das Objektiv der Kamera, die auch den lichtempfindlichen Empfänger mit der Matrixbildebene aufweist. Die Einstellung der Blende des Objektivs ist maßgeblich für den erfaßten Bereich der Fläche. Sofern die Blende weit geöffnet ist, wird ein relativ großer Flächenbereich erfaßt, während bei nahezu geschlossener Blende der Bereich eng begrenzt werden kann.

Die Anordnung der Lichtquellen ist grundsätzlich beliebig. Es kann beispielsweise vorgesehen werden, daß die Lichtquellen entlang einer Geraden angeordnet sind. Auch kann es zweckmäßig sein, daß die Lichtquellen jeweils einen gleichen Abstand zueinander aufweisen. Dadurch kann der Verlauf einer Krümmung oder einer anderen Verformung leicht erfaßt werden. Bei der Prüfung beispielsweise einer CD wird diese in der Regel um 360° gedreht, so daß die gesamte Fläche erfaßt werden kann.

Grundsätzlich können die Lichtquellen aber auch flächig, beispielsweise in Form eines Rasters, angeordnet sein. Hierdurch ist es möglich, auch stehende Flächen vollständig zu erfassen.

Grundsätzlich ist es jedoch vorteilhaft, wenn die Lichtquellen bei einer runden zu prüfenden Fläche an unterschiedlichen Radien der Fläche reflektiert werden. Hierbei kann vorgesehen, daß die Lichtquellen entlang eines radialen Strahls angeordnet sind. Dadurch ist es möglich, mit nur einem lichtempfindlichen Empfänger und nur einer Lichtquellenanordnung mit diskreten Lichtpunkten z. B. den gesamten Datenbereich einer CD oder DVD zu erfassen, wenn diese um 360° gedreht wird.

Grundsätzlich ist es zweckmäßig, wenn die Lichtquelle möglichst nah an der optischen Achse der Abbildungsoptik der Kamera angeordnet ist. Besonders zweckmäßig ist es, wenn bei einer Anordnung der Lichtquellen entlang einer Geraden zumindest für einige Lichtpunkte der Einfallswinkel des Lichts auf die zu prüfende Fläche 0° - 10° beträgt. Ein Einfallswinkel von 0° kann durch einen im Lichtstrahlenverlauf angeordneten teildurchlässigen Spiegel bewirkt werden. Durch diese Maßnahmen wird in vorteilhafter Weise erreicht, daß die Winkelmessung nahezu unempfindlich gegenüber einem Höhenschlag der Fläche ist.

Ein Problem bei einer solchen Messung besteht in der eindeutigen Zuordnung der abgebildeten Lichtpunkte zu den diesen erzeugenden Lichtquellen. Grundsätzlich wäre es möglich, daß eine der Lichtquellen durch die Verformung genau auf einen Lichtpunkt einer anderen Lichtquelle abgebildet wird und umgekehrt. Der Fehler könnte dann nicht mehr genau detektiert werden. Es kann hierbei zweckmäßig sein, wenn die Lichtquellen alternierend unterschiedliche Farben aufweisen. Somit ist eine einwandfreie Zuordnung der Abbildungen der Lichtpunkte auf der Bildebene gewährleistet, da die Farbreihenfolge bei keiner oder geringer Verformung gleich bleibt. Es kann aber auch vorgesehen werden, daß sich wenigstens eine Lichtquelle in einer definierten Lage zu den anderen Lichtqellen befindet, so daß eine eindeutige Zuordnung der abgebildeten Lichtpunkte auf der Bildebene möglich ist. Dies kann beispielsweise durch seitlich neben der Lichtquellenzeile angeordnete Positionslichtquellen erfolgen.

Die Verschiebung der Abbildungen auf der Matrixbildebene erfolgt unabhängig von der Art des verwendeten Lichts. Insbesondere haben andere Fehler oder Fehlerphänomene keinen Einfluß auf diese Messungen. Es ist daher gemäß einer weiteren Ausführungsform der Erfindung vorgesehen, die Verformungsmessung mit einer Erfassung von Doppelbrechungsphänomenen zu kombinieren. Hierzu ist vorgesehen, daß zwischen wenigstens einer Lichtquelle und der zu prüfenden Fläche eine Polarisationseinrichtung angeordnet ist, um das ausgestrahlte Licht zu polarisieren, bzw. daß wenigstens eine Lichtquelle polarisiertes Licht ausstrahlt, und daß zwischen dem lichtempfindlichen Empfänger und der zu prüfenden Oberfläche ein entsprechender Analysator vorgesehen ist, um Doppelbrechungseigenschaften erfassen zu können. Das Licht kann dabei linear, elliptisch oder zirkular polarisiert sein.

Auf der Bildebene werden unabhängig von der Polarisationsart eine oder mehrere Lichtquellen abgebildet. Sofern eine Änderung der Intensität erfolgt, läßt sich hieraus auf das Vorhandensein eines anderen Fehlers als eine Verformung schließen. Die Intensitätsänderung kann dann ohne weiteres als Doppelbrechung identifiziert werden. Sofern eine Verschiebung eines abgebildeten Punktes erfolgt, kann unmittelbar auf eine Verformung geschlossen werden.

Da neben der Prüfung einer CD mittels einer Matrixkamera in der Regel auch ein linienförmiges Abtasten während der Drehung der CD erfolgt, kann aus dem Vergleich der jeweiligen Bilder an den gleichen Stellen exakt auf die Art des Fehlers geschlossen werden. Sofern das Bild der Zeilenkamera beispielsweise hell ist, während die Abbildung des Lichtpunktes dort verändert, beispielsweise dunkel oder abgeschwächt ist, wird an dieser Stelle eine Doppelbrechungseigenschaft vorhanden sein. Sofern beide Bilder dunkel oder abgeschwächt sind, liegt ein anderer Fehler vor, da eine Abschwächung des Bildes auf der Zeilenkamera nicht auf eine Doppelbrechung zurückzuführen ist. Vollkommen unabhängig davon werden eventuelle Verformungen durch die Verschiebungen der abgebildeten Lichtpunkte erkannt.

Gemäß der Erfindung wird bei dem Verfahren zum optischen Erfassen der Verformung einer Fläche mit einem eine Matrixbildebene aufweisenden lichtempfindlichen Empfänger zunächst die Fläche mit wenigstens einer nahezu punktförmigen ungerichtetes Licht ausstrahlenden Lichtquelle beleuchtet. Es ist eine Abbildungsoptik vorgesehen, die derart eingestellt ist, daß die Lichtquelle scharf auf der Bildebene abgebildet wird. Die zu prüfende Fläche wirkt dabei als Reflexionsfläche.

Die Soll-Positionen der Abbildungen der Lichtquelle oder Lichtquellen auf der Bildebene können mit einer Referenzoberfläche ermittelt werden. Um eine Verknüpfung der abgebildeten Verschiebung mit der tatsächlichen Verformung erhalten zu können, kann die Vorrichtung mit einer Oberfläche mit definierter Verformung kalibriert werden. Hierzu kann beispielsweise eine sogenannte Taumel-CD verwendet werden, deren Mittelachse definiert geneigt zur Drehachse verläuft, um die sich die zu prüfende CD oder DVD während der Prüfphase dreht. Anschließend kann die Verformung anhand der Abweichung der Ist-Position der Abbildung der Lichtquelle von der bekannten Soll-Position der Abbildung der Lichtquelle auf der Bildebene ermittelt werden.

Es ist offensichtlich, daß die Vorrichtung und das Verfahren gemäß der Erfindung mit einfachen Mitteln realisierbar ist. Insbesondere können sehr einfache Lichtquellen eingesetzt werden, die lediglich annähernd punktförmig ausgebildet und ungerichtetes Licht aussenden müssen. Unabhängig von der Verformung wird daher wenigstens einer der Lichtstrahlen und somit die Lichtquelle auf der Bildebene des lichtempfindlichen Empfängers scharf abgebildet werden. Die zu prüfende Oberfläche wirkt dabei wie ein Spiegel, der die Lichtquelle nur dann in die Soll-Position abbildet, wenn die reflektierende Oberfläche den Anforderungen genügt und beispielsweise eben ist.

Das Verfahren und die Vorrichtung ist dabei unabhängig von der Beschaffenheit der Oberfläche. Es ist lediglich erforderlich, daß die Oberfläche zumindest teilweise spiegelnd ist. Dies ist bei einer Vielzahl von Oberflächen, insbesondere auch bei farbigen, weißen und schwarzen oder aber auch transparenten Oberflächen der Fall. Auch reflektierte Lichtstrahlen mit geringer Intensität reichen aus, um die Position der Abbildung zu erfassen, so daß eine Aussage über die Verformung der Oberfläche erhalten werden kann.

Die Erfindung wird im folgenden Anhand der schematischen Zeichnung näher erläutert. Es zeigen:

Fig. 1    den prinzipiellen Aufbau einer Vorrichtung gemäß der Erfindung,

Fig. 2    die Draufsicht auf die Vorrichtung gemäß Fig. 1,

Fig. 3 a-b    die Abbildung der Lichtquellen auf der Matrixbildebene des lichtempfindlichen Empfängers,

Fig. 4    ein Schaubild zur Verdeutlichung der Abbildungsverhältnisse,

Fig. 5    die Draufsicht auf eine Vorrichtung gemäß Fig. 1, jedoch mit einer anderen Lichtquellenanordnung,

Fig. 6    die Draufsicht auf eine Vorrichtung gemäß Fig. 1, jedoch mit einer weiteren Lichtquellenanordnung, und

Fig. 7    die Draufsicht auf eine Vorrichtung gemäß Fig. 1, jedoch mit einer noch weiteren Lichtquellenanordnung.

Die in der Zeichnung schematisch dargestellte Vorrichtung zum optischen Erfassen einer Verformung einer Oberfläche 11 weist eine Kamera 12 mit einem Objektiv 13 und einem lichtempfindlichen Empfänger mit einer Matrixbildebene 14 auf. Zum Belichten des lichtempfindlichen Empfängers ist eine Vielzahl von punktförmiger Lichtquellen 15 vorgesehen, die ungerichtetes Licht ausstrahlen. Der lichtempfindliche Empfänger ist mit seinem Ausgang mit einer nicht dargestellten Datenverarbeitungsanlage verbunden, um das erzeugte Bild auswerten zu können.

Die Lichtquellen 15 können beispielsweise Bestandteil eines SMD-Bauelementes sein, auf dem in einer Geraden eine Vielzahl von hinreichend kleinen Leuchtdioden angeordnet ist. Grundsätzlich ist es auch möglich, daß die Vielzahl der Lichtquellen durch eine Blende erzeugt wird, unter der ein in Bezug auf die Abmessung der Löcher größeres flächiges Leuchtmittel angeordnet ist. Damit lassen sich Lichtquellen erzeugen, die eine Strahlkeule mit ausreichend großem Öffnungswinkel bei gleichmäßiger Beleuchtungsstärke aufweisen. Der minimale Öffnungswinkel $\omega$ ist abhängig von der maximal zu erfassenden Verkippung $\alpha$ der zu prüfenden Fläche. Grundsätzlich gilt: $\omega \geq 2\alpha$.

Die Lichtquellen 15 sind mit Abstand zueinander entlang einer geraden Zeile 16 angeordnet. Es wird somit eine Vielzahl von diskreten Leuchtpunkten gebildet. Die Abbildungsoptik 13, also in der Regel das Objektiv der Kamera 12, ist so eingestellt, daß die Lichtquellen scharf auf der Matrixbildebene 14 des lichtempfindlichen Empfängers 12 abgebildet werden. Die zu prüfende Oberfläche 11 wirkt dabei als Reflexionsfläche, die ein Abbild der Lichtquellen 15 auf die im wesentlichen parallel zur Oberfläche 11 verlaufende Bildebene projiziert. Es wird daher auf der Bildebene ebenfalls eine Zeile von diskreten Lichtpunkten erzeugt.

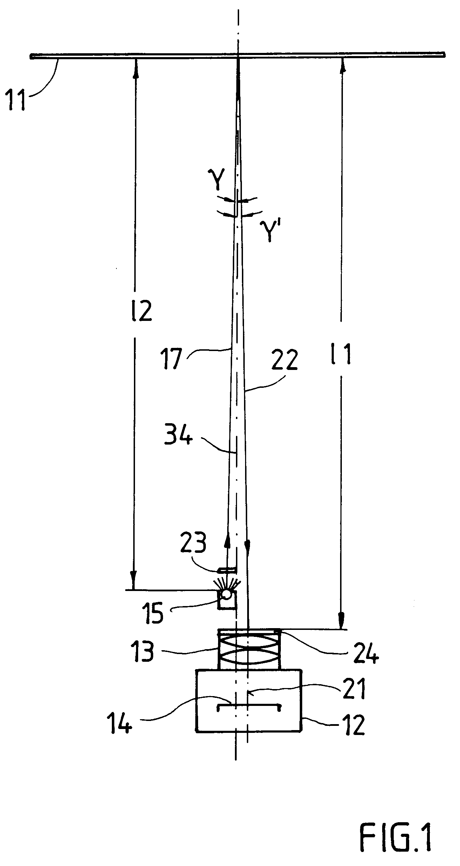

Wie aus Fig. 1 ersichtlich, strahlt die Lichtquelle 15 im wesentlichen gleichförmig nach allen Seiten Licht ab. Die Anordnung ist im einzelnen so getroffen, daß wenigstens ein Lichtstrahl 17 durch die Oberfläche 11 in das Objektiv 13 reflektiert wird, so daß die Lichtquelle 15 scharf als Lichtpunkt 18 auf der Bildebene 14 erscheint. Vorzugsweise ist, wie in der Zeichnung dargestellt, der Einfallswinkel γ der den lichtempfindlichen Empfänger belichtenden Strahlen so gewählt, daß die Lichtstrahlen nahezu senkrecht auf die Oberfläche auftreffen. Dies wird dadurch erreicht, daß, in der Draufsicht, die Lichtquellenzeile 16 möglichst dicht an der optischen Achse 34 der Abbildungsoptik 13 angeordnet ist, ohne jedoch den Lichteinfall zu behindern.

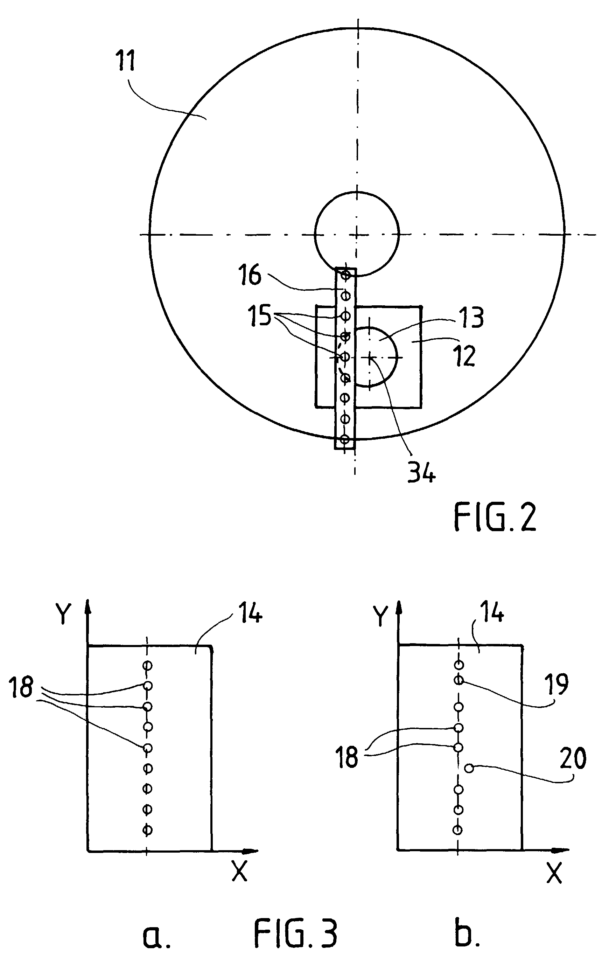

Der Einfallswinkel γ kann somit 0,5° - 5°, beispielsweise 1,5° betragen. Dies gilt selbstverständlich bei einer räumlichen Anordnung, wie insbeosndere aus Fig. 2 ersichtlich, nur für die Lichtquellen, die der optischen Achse des Objektivs am nächsten liegen. Für die weiter entfernt liegenden Lichtquellen ist der Einfallwinkel entsprechend größer.

Es ist aus dem Strahlenverlauf offensichtlich, daß eine Verformung der CD, insbesondere ein gegenüber der ebenen Oberfläche geneigter Bereich, eine Ablenkung des Lichtstrahls in eine andere Richtung bewirkt. Der Ausfallswinkel γ' relativ zur Normallage wird je nach Neigung größer oder kleiner werden, so daß die Lichtquelle zwar scharf, jedoch an einer abweichenden Position auf der Bildebene 14 dargestellt wird.

Dieser Effekt ist in den Fig. 3a und 3b dargestellt. In Fig. 3a ist eine Abbildung einer ebenen Oberfläche ohne Verformungen dargestellt. Es ist offensichtlich, daß dadurch die gerade Zeile 16 mit den einzelnen Lichtquellen 15 ebenfalls als gerade Zeile von Lichtpunkten 18 abgebildet wird. In Fig. 3b ist das Abbild der geraden Lichtquellenzeile nach der Reflexion an einer Oberfläche mit Verformungen dargestellt. Der eine Lichtpunkt 19 ist in Y-Richtung und der andere Punkt 20 ist in X-Richtung durch die Verformung verschoben worden. Selbstverständlich kann ein Lichtpunkt auch in beide Richtungen gleichzeitig verschoben werden. Anhand des Ausmaßes der Verschiebung kann auf das Ausmaß der fehlerhaften Winkelablenkung und somit auf das Ausmaß der Verformung der Oberfläche geschlossen werden.

Die gemessene Ist-Position der Lichtpunkte 18, 19, 20 kann wegen der scharfen Abbildung auf der Bildebene 14 exakt bestimmt werden. Vor der Prüfung muß die Vorrichtung lediglich justiert und kalibriert werden. Dabei werden die Soll-Positionen der Lichtpunkte auf der Bildebene 14 anhand einer einwandfreien Oberfläche bestimmt. Schließlich wird eine Oberfläche mit einer definierten Verformung bzw. Neigung geprüft. Hierdurch kann ein Relation zwischen gemessener Abweichung des Lichtpunkte in X- und Y-Richtung und dem tatsächlichen Ausmaß der Verformung, also einem Fehlerwinkel in radialer und/oder tangentialer Richtung, bestimmt werden.

Der Vorteil der Anordnung ist darin zu sehen, daß aufgrund des ungerichteten Lichtes die Lichtquelle stets mit gleicher Helligkeit und scharf abgebildet werden kann. Es wird daher stets ein scharfer Lichtpunkt auf der Bildebene erzeugt, dessen Position exakt bestimmbar ist. Da die Winkelabweichung in radialer Richtung und in tangentialer Richtung in eindeutiger geometrischer Beziehung zu den gemessen Abweichung in X- und Y-Richtung auf der Bildebene stehen, kann die tatsächliche Verformung exakt bestimmt werden.

Ein anderer Vorteil ist darin zu sehen, daß die Lichtquellen 15 sehr einfach und sehr klein bauend ausgebildet sein können. Irgendwelche optischen Elemente und Blenden zum Bündein oder Begrenzen des Lichtstrahls sind nicht erforderlich. Die Lichtquellen 15 können daher beispielsweise als LED ausgebildet sein, die auf einem SMD-Bauteil entlang einer Geraden angeordnet sind. Es ist daher möglich, die Lichtzeile 16 mit den Lichtquellen 15 sehr dicht an der optische Achse 21 des lichtempfindlichen Empfängers 12 anzuordnen. Spiegel- oder andere Umlenkeinrichtungen sind dabei nicht erforderlich. Es kann sogar vorgesehen werden, daß die Lichtzeile 16 das Objektiv 13 des lichtempfindlichen Empfängers teilweise verdeckt. Es muß lediglich gewährleistet sein, daß der Lichtweg 22 zum lichtempfindlichen Empfänger nicht durch die Lichtzeile 16, einer Lichtquelle 15 oder eines anderen Bauteiles der Vorrichtung behindert wird. Da die Blende jedoch nahezu geschlossenen sein kann, ist lediglich ein geringer Lichtdurchgang zum Objektiv erforderlich, so daß derartige Behinderungen leicht vermieden werden können.

Durch diesen Aufbau läßt sich mit einfachen Mitteln eine sehr hohe Auflösung bei der Winkelmessung erzielen. Im wesentlichen hängt die Genauigkeit von dem gewählten Abstand $l_1$ des Objektivs und $l_2$ der Lichtquelle zur Oberfläche 11 ab. Die mögliche Auflösung pro Pixel der Bildebene ergibt sich aus:

$$\Delta\alpha/\text{Pixel [rad]} = 1/(l_2 \times M) \times p$$

M ist der Abbildungsmaßstab der Vorrichtung und ergibt sich aus:

$$M = L/G = f/(l_1 + l_2)/(1 - f/(l_1 + l_2))$$

p ist die Pixelgröße, L ist das entsprechende Ausmaß der Bildebene und G die Ausdehnung der Lichtquellenzeile 16. So lassen sich mit $l_1$ = 220 mm, $l_2$ = 200 mm und f = 25 mm und einer üblichen Pixelgröße von 8 μm ein Auflösevermögen von etwa 0,036°/Pixel bzw. 0,63 mrad/Pixel erreichen. Da die maximal zulässige Winkelabweichung bei CD's oder DVD's etwa um den Faktor 10 darüber liegt, nämlich 0,8° in radialer und 0,3° in tangentialer Richtung, reicht dieses Auflösevermögen vollkommen aus. Beachtenswert ist hierbei, daß trotz der hohen erreichbaren Auflösung herkömmliche Bauteile verwendet werden können.

Für den Einfluß des Höhenschlages auf die Messung ist der Einfallswinkel γ maßgebend. Aufgrund des nahezu senkrechten Einfalls des Lichtes hat der Höhenschlag keine oder nur geringe Auswirkungen auf das Meßergebnis.

Da jedoch ein Höhenschlag nicht sprunghaft entsteht, sondern durch wenigstens zwei geneigte Flächenabschnitte begrenzt wird, kann anhand der ermittelten Winkelabweichung an mehreren Stellen des Radius auch der tatsächliche Höhenschlag ermittelt werden. Durch die Winkelabweichungen kann durch eine Integration leicht auf den Höheverlauf geschlossen werden. Dabei wird die Ermittlung des Höhenschlages exakter, je mehr Lichtquellen eingesetzt werden. Eine Integration ist mittels einer Datenverarbeitungsanlage leicht durchführbar und relativ unempfindlich bei Ausreißern bei den Messwerten.

Es ist offensichtlich, daß die Lichtpunkte unabhängig von der Art des ausgestrahlten Lichtes scharf auf der Bildebene abgebildet werden können. Es ist daher weiterhin möglich, mit dieser Anordnung andere Fehlerphänomene zu erfassen, die keinen Einfluß auf die Position sondern lediglich auf die Intensität des wenigstens einen reflektierten Lichtstrahls 22 haben. So können beispielsweise Verdunklungen, Kratzer oder dergleichen zumindest an den beleuchteten Stellen detektiert werden. Bei der in Fig. 1 gezeigten Vorrichtung ist zwischen den Lichtquellen 15 und der Oberfläche 11 eine Polarisationseinrichtung 23 angeordnet, um das ausgestrahlte Licht linear, elliptisch oder zirkular zu polarisieren. Die Polarisationseinrichtung weisen dementsprechende Polfilter und Verzögerungsplatten, beispielsweise eine λ/4-Platte, auf. Vor der Kamera 12 ist ein entsprechender Analysator 24 angeordnet. Hierdurch können doppelbrechende Eigenschaften der Oberfläche erfaßt werden.

Im einzelnen sind die Polarisationseinrichtungen 23, 24 so zueinander ausgerichtet, daß ein voller Lichtdurchgang dann stattfindet, wenn keine Doppelbrechung an der Oberfläche erfolgt. Dadurch ist es möglich, daß auf jeden Fall die Lichtquellen auf der Bildebene 14 abgebildet werden. Bei dem Auftreten einer Doppelbrechung wird die durch die Polarisationseinrichtung 24 durchgelassene Lichtmenge geringer, ohne daß jedoch eine Verschiebung des Lichtpunktes erfolgt. Da die Wirkungen der verschiedenen Fehlerursachen ebenfalls verschieden sind und sich gegenseitig nicht beeinflussen, können diese beiden Fehlerphänomene ohne weiteres mit nur einem lichtempfindlichen Empfänger und mit nur einem erzeugten Bild detektiert werden.

Da die zu prüfende Oberfläche lediglich als Spiegel wirkt, hat dies zur Folge, daß bei einer auftretenden Verformung, insbesondere einer Neigung der Oberfläche, der eigentlich zu prüfende Meßpunkt 25 nicht mit dem das Abbild erzeugenden Punkt auf der Oberfläche übereinstimmt. Dies bedeutet, daß eine einer bestimmten Stelle 25 der Oberfläche zugeordnete Lichtquelle 26 bei einer Verformung nicht an dieser Stelle reflektiert wird. Tatsächlich erfolgt die Spiegelung an einem um den Wert z verschobenen Punkt 27.

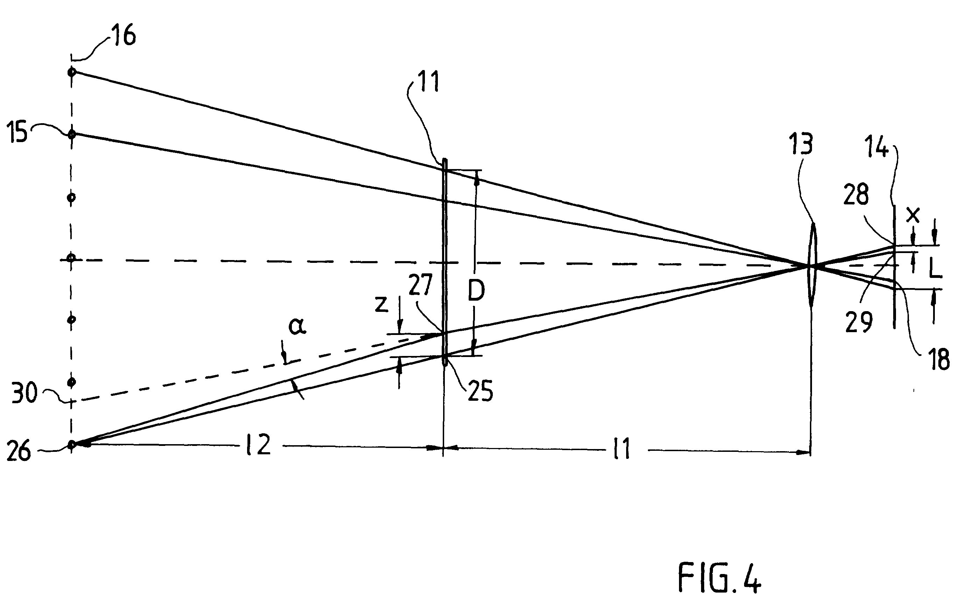

Der tatsächliche Strahlenverlauf ist in Fig. 4 in aufgeklappter Darstellungsweise gezeigt. Die Lichtquelle 26 ist im fehlerfreien Fall einem Punkt 25 der Oberfläche 11 zugeordnet und wird in den Lichpunkt 28 auf der Bildebene 14 projiziert. Durch eine fehlerhafte Neigung wird der Lichtstrahl jedoch um den Winkel α abgelenkt, so daß die Lichtquelle auf den Punkt 29 der Bildebene 14 abgebildet wird. Dies entspricht einer Position 30 auf der Lichtzeile 16. Der Reflexionspunkt 27 ist dementsprechend verschoben, so daß nicht die Verformung in Punkt 25 gemessen wird. Es handelt sich hierbei jedoch um eine korrigierbaren Mehrdeutigkeit, die problemlos eliminiert werden kann.

Praktisch hat eine derartige Verschiebung ohnehin keine Auswirkungen auf das Meßergebnis, da im einzelnen nicht auf die exakte Lage der Verformung an sich, sondern in erster Linie auf das Ausmaß der Verformung ankommt. Auch läßt sich der tatsächlich Ort der gemessenen Verformung genau bestimmen. Es gilt:

$$z = (l_1 \times l_2)/(l_1 + l_2) \times \alpha$$

Die Abweichung z ist entsprechend gering und betragen bei dem obengenannten Ausführungsbeispiel lediglich 1,8 mm bei einem Fehlwinkel α von 1°.

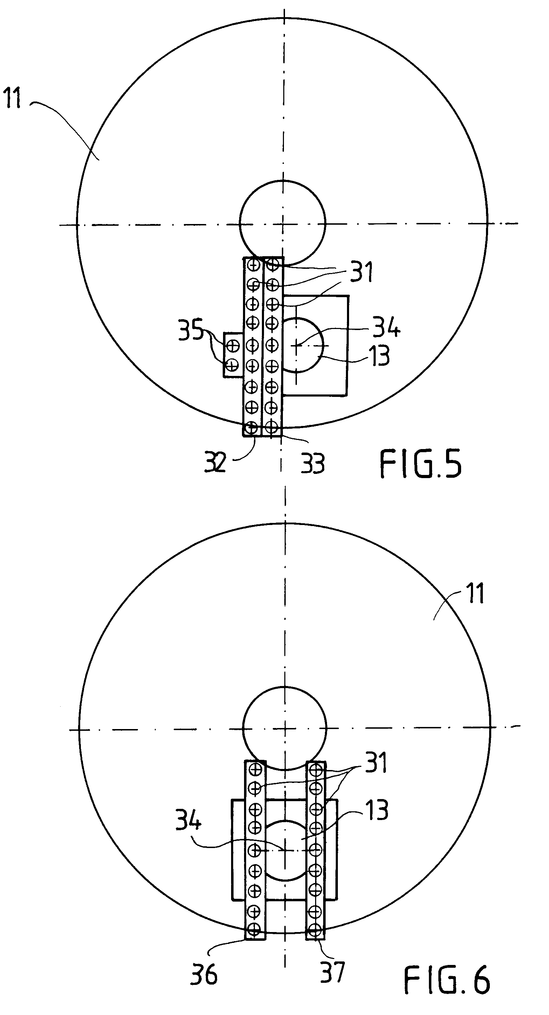

Bei dem in Fig. 5 dargestellten Ausführungsbeispiel sind die Lichtquellen 31 entlang zweier paralleler Lichtzeilen 32, 33 angeordnet. Dicht neben der in der Zeichnung rechten Lichtzeile 33 befindet sich die optische Achse 34 des Objektivs 13 der Kamera. Im einzelnen ist die Anordnung so getroffen, daß nur eine Lichtzeile polarisiertes Licht ausstrahlt. Anhand der Änderung der Intensität der abgebildeten Lichtpunkte der einen Lichtzeile läßt sich eine eventuelle Doppelbrechung detektieren. Vor der Kamera ist dazu ein entsprechender nicht dargestellter Analysator vorgesehen. Die andere Lichtzeile wird ohne Intensitätsverlust auf der Bildebene abgebildet. Durch diese Maßnahme wird auch eine bessere Zuordnung der einzelnen Lichtpunkte zu den entsprechenden Lichtquellen ermöglicht, da bei den normalerweise zu erwartenden geringen Verkippungen die beiden Zeilen wiederum als zwei parallele Lichtpunktreihen abgebildet werden.

Ferner sind bei dieser Ausführungsform noch zwei weitere Positionslichtquellen 35 vorgesehen, die in einer bestimmten relativen Position zu den anderen Lichtquellen 31 stehen. Im einzelnen ist die Anordnung so getroffen, daß die Anzahl der inneren und der äußeren Lichtquellen bekannt ist, so daß bei einem Verschwinden eines Lichtpunktes auf der Bildebene, beispielsweise durch das Abtasten eines Randbereichs, der nicht mehr in das Objektiv reflektiert, festgestellt werden kann, welche Lichtquelle nicht mehr abgebildet worden ist. Dadurch läßt sich mit einfachen Mitteln eine eindeutige Zuordnung von abgebildetem Lichtpunkt und Lichtquelle erreichen.

Bei dem in Fig. 6 dargestellten Ausführungsbeispiel sind ebenfalls zwei parallele Lichtquellenreihen 36, 37 vorgesehen. Einer der Lichtquellenzeilen ist mit einer nicht dargestellten Polarisationseinrichtung versehen, um polarisiertes Licht auszustrahlen. Hier befindet sich die optische Achse 34 der Abbildungsoptik 13 jedoch zwischen den beiden Zeilen.

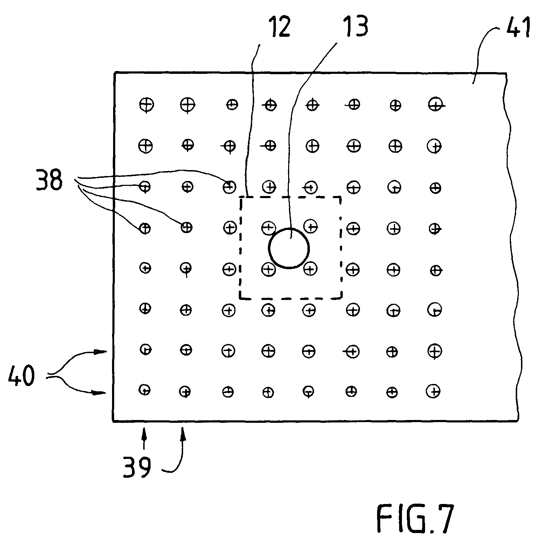

In Fig. 7 ist eine andere Anordnung von Lichtquellen 38 gezeigt. Hier sind die Lichtquellen 38 in Form eines Rasters in Spaltenrichtung 39 und Zeilenrichtung 40 angeordnet. Die Kamera 12 befindet sich so unterhalb dieser Anordnung, daß die einzelnen reflektierten Lichtstrahlen in das Objektiv bzw. durch die Blendenöffnung auf den lichtempfindlichen Empfänger treffen. Diese Anordnung kann zum Prüfen stehender oder aber auch linear bewegter Objekte 41 vorteilhaft sein, die keine runde Kontur haben. Selbstverständlich können mit dieser Anordnung auch Gegenstände mit runder Kontur erfaßt werden. Bei runden Konturen erscheint es jedoch zweckmäßig, die Lichtpunkte in entlang von konzentrischen Kreisen auszubilden, in deren Mittelpunkt das Objektiv der Kamera sitzt.

Grundsätzlich ist es natürlich auch möglich, daß bei den gezeigten Ausführungsbeispielen nur einzelne Lichtquellen 15, 31, 38 einer Lichtquellenzeile 16, 32, 33, 36, 37, 39, 40 polarisiertes Licht aussenden bzw. mit einer Polarisationseinrichtung versehen sind.

Es ist offensichtlich, daß hierdurch eine Vorrichtung und auch ein Verfahren zum optischen Erfassen von Verformungen einer flachen, ebenen und glatten Oberfläche bereitgestellt werden kann, mit der bzw. dem eine hohe Genauigkeit bei der Ermittlung des Ausmaßes der Verformung erreicht werden. Dennoch können einfache und handelsübliche Bauteile eingesetzt werden.

Die Vorrichtung eignet sich insbesondere zum optischen Prüfen einer CD oder DVD oder eines anderen entsprechenden optischen Datenträgers. Bei der Prüfung einer CD wird die Datenseite optisch abgetastet, indem die CD um eine senkrecht zur Oberfläche gerichtete Achse wenigstens einmal gedreht wird. Die Zeile mit diskreten Lichtpunkten erstreckt sich dabei in radialer Richtung vorzugsweise über den gesamtem Datenbereich, also etwa dem halben Durchmesser der CD oder DVD. Dadurch ist es möglich, während einer Umdrehung die gesamte Oberfläche mit einer Lichtquellenzeile der oben erläuterten Art vollständig und auf mehreren Radien gleichzeitig abzutasten. Die Lichtquellenzeile erstreckt sich dazu entlang eines Radius, während die optische Achse 34 der Abbildungsoptik in etwa auf der Höhe des halben Radius verläuft.

Vorstehend wurde die Vorrichtung mit nur einer Kamera beschrieben. Es ist selbstverständlich auch möglich, über entsprechende Strahlteiler zwei oder mehrere Kameras einzusetzen. Es kann dabei zweckmäßig sein, wenn beispielsweise vor nur einer Kamera ein Analysator angeordnet ist. Hierdurch wird die Vielzahl der detektierbaren Fehlermöglichkeiten erhöht.

Bezugszeichenliste

| 11 | Oberfläche |
|---|---|
| 12 | Kamera |
| 13 | Objektiv |
| 14 | Bildebene des lichtempfindlichen Empfängers |
| 15 | Lichtquelle |
| 16 | Lichtquellenzeile |
| 17 | ausgestrahlter Lichtstrahl |
| 18 | Lichtpunkt |
| 19 | Lichtpunkt |
| 20 | Lichtpunkt |
| 21 | optische Achse |
| 22 | reflektierter Lichtstrahl |
| 23 | Polarisationseinrichtung |
| 24 | Analysator |
| 25 | Reflexionspunkt |
| 26 | Lichtpunkt |
| 27 | Reflexionspunkt |
| 28 | Bildpunkt |
| 29 | Bildpunkt |
| 30 | Position |
| 31 | Lichtquelle |
| 32 | Lichtquellenzeile |
| 33 | Lichtquellenzeile |
| 34 | optische Achse |
| 35 | Positionslichtquelle |
| 36 | Lichtquellenzeile |
| 37 | Lichtquellenzeile |
| 38 | Lichtquelle |
| 39 | Lichtquellenspalte |
| 40 | Lichtquellenzeile |
| 41 | Gegenstand |

**Patentansprüche**

Vorrichtung und Verfahren zum optischen Erfassen der Verformung einer Fläche

1. Vorrichtung zum optischen Erfassen der Verformung einer Fläche (11) mit wenigstens einem eine Matrixbildebene (14) aufweisenden lichtempfindlichen Empfänger (12), der von wenigstens einer Lichtquelle (15) belichtet wird, dadurch gekennzeichnet, daß die Lichtquelle nahezu punktförmig ausgebildet ist, die die zu prüfende Oberfläche (11) mit ungerichtetem Licht beleuchtet, und daß eine Abbildungsoptik (13) vor der Bildebene des lichtempfindlichen Empfängers vorgesehen und derart eingestellt ist, daß die Lichtquelle scharf auf der Bildebene (14) des lichtempfindlichen Empfängers abgebildet wird, so daß die zu prüfende Fläche als Reflexionsfläche wirkt, wobei die Lichtquelle bei einer einwandfreien zu prüfenden Fläche eine bekannte Soll-Position auf der Bildebene aufweist, so daß die Verformung anhand der Abweichung der Ist-Position der Abbildung der Lichtquelle von der bekannten Soll-Position der Abbildung der Lichtquelle auf der Bildebene ermittelbar ist.

2. Vorrichtung nach Anspruch 1, dadurch gekennzeichnet, daß mehrere Lichtquellen (15) vorgesehen sind.

3. Vorrichtung nach Anspruch 1 oder 2, dadurch gekennzeichnet, daß die Lichtquellen entlang einer geraden Zeile (16) angeordnet sind.

4. Vorrichtung nach einem der Ansprüche 1 bis 3, dadurch gekennzeichnet, daß die Lichtquellen bei einer runden zu prüfenden Fläche an unterschiedlichen Radien der Fläche reflektiert werden.

5. Vorrichtung nach einem der Ansprüche 1 bis 4, dadurch gekennzeichnet, daß die Lichtquellen flächenförmig, insbesondere rasterförmig, angeordnet sind.

6. Vorrichtung nach einem der Ansprüche 1 bis 5, dadurch gekennzeichnet, daß wenigstens eine Lichtquelle dicht bei der optischen Achse (34) der Abbildungsoptik (13) angeorndet ist, um einen möglichst steilen Einfallswinkel (γ) des Lichts auf die zu prüfende Fläche zu bewirken.

7. Vorrichtung nach einem der Ansprüche 1 bis 6, dadurch gekennzeichnet, daß die Lichtquelle (15) wenigstens eine Leuchtdiode aufweist.

8. Vorrichtung nach einem der Ansprüche 1 bis 7, dadurch gekennzeichnet, daß die Lichtquelle wenigstens einen Leuchtdiodenchip oder eine Zeile aus Leuchtdiodenchips aufweist.

9. Vorrichtung nach einem der Ansprüche 1 bis 6, dadurch gekennzeichnet, daß die Lichtquelle eine Blende mit einer Vielzahl von Durchbrechungen aufweist, unter der wenigstens ein flächiges Leuchtmittel angeordnet ist, dessen Ausmaß größer als das Ausmaß der Durchbrechungen ist.

10. Vorrichtung nach einem der Ansprüche 1 bis 9, dadurch gekennzeichnet, daß die Lichtquellen alternierend unterschiedliche Farben aufweisen.

11. Vorrichtung nach einem der Ansprüche 1 bis 10, dadurch gekennzeichnet, daß wenigstens eine Lichtquelle (35) in bezug auf die anderen Lichtquellen (31) so angeordnet ist, daß die Abbildung der Lichtquellen auf der Matrixbildebene eindeutig den dazugehörigen Lichtquellen zugeordnet werden kann.

12. Vorrichtung nach einem der Ansprüche 1 bis 11, dadurch gekennzeichnet, daß zwischen der wenigstens einer Lichtquelle und der zu prüfenden (11) Fläche eine Polarisationseinrichtung (23) vorgesehen ist, um das ausgestrahlte Licht zu polarisieren, bzw. daß wenigstens eine Lichtquelle polarisiertes Licht ausstrahlt, und daß zwischen dem lichtempfindlichen Empfänger (12) und der zu prüfenden Oberfläche ein entsprechender Analysator (24) vorgesehen ist, um Doppelbrechungseigenschaften erfassen zu können.

13. Vorrichtung nach einem der Ansprüche 1 bis 12, dadurch gekennzeichnet, daß wenigstens zwei parallele Leuchtquellenzeilen (31, 32; 36, 37) vorgesehen sind, wobei eine der Zeilen polarisiertes Licht ausstrahlt bzw. mit einer Polarisationseintrichtung versehen ist.

14. Vorrichtung nach einem der Ansprüche 1 bis 13, dadurch gekennzeichnet, daß wenigstens zwei parallele Leuchtquellenzeilen (36, 37) vorgesehen sind, wobei die optische Achse (34) der Abbildungsoptik (13) zwischen diesen Zeilen verläuft.

15. Vorrichtung nach einem der Ansprüche 1 bis 14, dadurch gekennzeichnet, daß die zu prüfende Fläche die Datenseite einer CD, DVD oder eines entsprechenden optischen Datenträgers ist.

16. Verfahren zum optischen Erfassen der Verformung einer Fläche mit wenigstens einem eine Matrixbildebene aufweisenden lichtempfindlichen Empfänger, der von wenigstens einer Lichtquelle belichtet wird, gekennzeichnet durch folgende Schritte:

Beleuchten der Fläche mit ungerichtetem Licht wenigstens einer nahezu punktförmig ausgebildeten Lichtquelle,
Einstellen einer Abbildungsoptik derart, daß die Lichtquelle scharf auf der Bildebene abgebildet wird und die zu prüfende Fläche als Reflexionsfläche dient, und
Ermitteln der Verformung anhand der Abweichung der Ist-Position der Abbildung der Lichtquelle von der bekannten Soll-Position der Abbildung der Lichtquelle auf der Bildebene.

**17.** Verfahren nach Anspruch 16, dadurch gekennzeichnet, daß mehrere Lichtquellen vorgesehen sind, die an unterschiedlichen Bereichen der Fläche reflektiert werden, um mehrere Bereiche der Fläche zu erfassen.

**18.** Verfahren nach Anspruch 16 oder 17, dadurch gekennzeichnet, daß die Lichtquellen auf eine geraden Zeile angeordnet sind.

**19.** Verfahren nach Anspruch 16 oder 17, dadurch gekennzeichnet, daß die Lichtquellen flächig, insbesondere rasterförmig angeordnet sind.

**20.** Verfahren nach einem der Ansprüche 16 bis 19, dadurch gekennzeichnet, daß das ausgestrahlte Licht wenigstens einer Lichtquelle polarisiert wird bzw. daß wenigstens eine Lichtquelle polarisiertes Licht ausstrahlt, und daß das von der Fläche reflektierte Licht einen entsprechenden Analysator durchläuft, um Doppelbrechungen erfassen zu können.

**21.** Verfahren nach einem der Ansprüche 16 bis 20, dadurch gekennzeichnet, daß die zu prüfende Fläche die Datenseite einer CD, DVD oder eines entsprechenden optischen Datenträgers ist.

FIG.1

FIG.2

a.        FIG.3        b.

FIG.4

EP 0 893 685 A2

FIG.5

FIG.6

FIG.7